# EUROPEAN PATENT APPLICATION

(11) **EP 4 694 518 A1**
(43) Date of publication of application: **11.02.2026**
(21) Application number: 23936837.6
(22) Date of filing: 12.05.2023
(51) Int. Cl.: H04W 74/00, H04W 74/08

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: RGTH
(86) International application number: PCT/CN2023/093870
(87) International publication number: WO 2024/234141

(57) **Abstract**

Provided are a wireless communication method, a terminal device, and a network device. The method comprises: a terminal device receives first information sent by a network device, wherein the first information is used for indicating a first resource, and the first resource is associated with a first synchronization signal block (SSB). The first information is further used for indicating a second resource, and the second resource is associated with a second SSB. According to embodiments of the present application, the first information indicates a resource (i.e., the first resource and/or the second resource) associated with an SSB (the first SSB and/or the second SSB), so that the terminal device can obtain and send uplink synchronization between TRPs of the first SSB according to the indicated first resource, and/or can obtain and send uplink synchronization between TRPs of the second SSB according to the indicated second resource.

## Description

### TECHNICAL FIELD

This application relates to the field of communications technologies, and more specifically, to a wireless communication method, a terminal device, and a network device.

### BACKGROUND

In a scenario of multiple transmitting and receiving points (transmitting and receiving point, TRP), how to determine resources corresponding to different TRPs is an urgent problem to be resolved.

### SUMMARY

This application provides a communication method, a network device, and a terminal device. The following describes the aspects related to this application.

According to a first aspect, a wireless communication method is provided, and the method includes: receiving, by a terminal device, first information transmitted by a network device, where the first information is used for indicating a first resource, and the first resource is associated with a first synchronization signal block SSB.

According to a second aspect, a wireless communication method is provided, and the method includes: transmitting, by a network device, first information to a terminal device, where the first information is used for indicating a first resource, and the first resource is associated with a first synchronization signal block SSB.

According to a third aspect, a terminal device is provided, including: a receiving unit, configured to receive first information transmitted by a network device, where the first information is used for indicating a first resource, and the first resource is associated with a first synchronization signal block SSB.

According to a fourth aspect, a network device is provided, including: a transmitting unit, configured to transmit first information to a terminal device, where the first information is used for indicating a first resource, and the first resource is associated with a first synchronization signal block SSB.

According to a fifth aspect, a terminal device is provided, including: a processor, a memory, and a communications interface. The memory is configured to store one or more computer programs, and the processor is configured to invoke the computer programs in the memory to cause the terminal device to execute some or all of the steps in the method according to the first aspect.

According to a sixth aspect, a network device is provided, including: a processor, a memory, and a communications interface, where the memory is configured to store one or more computer programs, and the processor is configured to invoke the computer programs in the memory to cause the network device to execute some or all of the steps in the method according to the second aspect.

According to a seventh aspect, an embodiment of this application provides a communications system, where the communications system includes the terminal device and/or network device described above. In another possible design, the communications system may further include another device that interacts with the terminal device or the network device in the solution provided in embodiments of this application.

According to an eighth aspect, an embodiment of this application provides a computer-readable storage medium. The computer-readable storage medium stores a computer program, and the computer program causes a terminal device or a network device to perform some or all of the steps in the method according to the foregoing aspects.

According to a ninth aspect, an embodiment of this application provides a computer program product. The computer program product includes a non-transitory computer-readable storage medium storing a computer program, and the computer program is operable to cause a terminal device or a network device to perform some or all of the steps in the method according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the method according to the foregoing aspects.

In some cases, a TRP may be associated with a synchronization signal/physical broadcast channel signal block (synchronization signal and PBCH block, SSB). For example, a terminal device may determine a corresponding TRP based on a received SSB. Therefore, in embodiments of this application, a resource corresponding to a TRP associated with a first SSB may be determined by indicating, through first information, a resource (namely, a first resource) associated with an SSB (namely, the first SSB), which helps the terminal device determine resources corresponding to different TRPs.

### BRIEF DESCRIPTION OF THE DRAWINGS

FIG. 1A to FIG. 1C are system architectural diagrams of communications systems to which an embodiment of this application is applicable.
FIG. 2 is a schematic flowchart of a four-step random access procedure.
FIG. 3 is an example diagram of a relationship between an uplink frame and a downlink frame in a TA scenario.
FIG. 4 is a schematic flowchart of a wireless communication method according to an embodiment of this application.
FIG. 5 is a schematic diagram of a structure of a terminal device according to an embodiment of this application.
FIG. 6 is a schematic structural diagram of a network device according to an embodiment of this application.
FIG. 7 is a schematic diagram of a structure of a communications apparatus according to an embodiment of the application.

### DETAILED DESCRIPTION OF THE EMBODIMENTS

Technical solutions in this application are described below with reference to the accompanying drawings.

### Communications system architecture

The technical solutions in embodiments of this application may be applied to various communications systems, for example, a global system for mobile communications (global system of mobile communication, GSM), a code-division multiple access (code division multiple access, CDMA) system, a wideband code-division multiple access (wideband code division multiple access, WCDMA) system, general packet radio service (general packet radio service, GPRS), a long-term evolution (long term evolution, LTE) system, an advanced long-term evolution (advanced long term evolution, LTE-A) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (non-terrestrial networks, NTN) system, a universal mobile telecommunications system (universal mobile telecommunication system, UMTS), a wireless local area network (wireless local area networks, WLAN), wireless fidelity (wireless fidelity, WiFi), a fifth-generation (5th-generation, 5G) system, or another communications system, for example, a future communications system such as a sixth-generation mobile communications system or a satellite communications system.

Generally, a quantity of connections supported by a conventional communications system is limited, and is also easy to implement. However, with development of communication technologies, a mobile communications system not only supports conventional communication, but also supports, for example, device-to-device (device to device, D2D) communication, machine-to-machine (machine to machine, M2M) communication, machine type communication (machine type communication, MTC), vehicle-to-vehicle (vehicle to vehicle, V2V) communication, or vehicle to everything (vehicle to everything, V2X) communication. Embodiments of this application may also be applied to these communications systems.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a dedicated spectrum.

Embodiments of this application may be applied to an NTN system, or may be applied to a terrestrial communication network (terrestrial networks, TN) system. By way of example and without limitation, the NTN system includes an NR-based NTN system and an IoT-based NTN system.

Embodiments of this application are described with reference to a network device and a terminal device. The terminal device may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, a user apparatus, or the like.

In embodiments of this application, the terminal device may be a station (STATION, ST) in a WLAN, may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (public land mobile network, PLMN), or the like.

The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to function as a base station. For example, the terminal device may function as a scheduling entity, which provides a sidelink signal between terminal devices in V2X, D2D, or the like. For example, a cellular phone and a vehicle communicate with each other through a sidelink signal. A cellular phone and a smart home device communicate with each other, without relaying a communication signal through a base station.

In embodiments of this application, the terminal device may be deployed on land, including being indoors or outdoors, may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (mobile phone), a pad (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home), or the like. The terminal device involved in embodiments of this application may also be referred to as a terminal, a user equipment (user equipment, UE), an access terminal device, a vehicle-mounted terminal, an industrial control terminal, a UE unit, a UE station, a mobile site, a mobile station, a remote station, a remote terminal device, a mobile device, a UE terminal device, a wireless communications device, a UE agent, a UE apparatus, or the like. The terminal device may also be fixed or mobile.

By way of example rather than limitation, in embodiments of this application, the terminal device may alternatively be a wearable device. The wearable device may also be referred to as a wearable intelligent device, and is a general term for wearable devices, such as glasses, gloves, watches, clothes, and shoes, that are developed by applying wearable technologies to intelligent designs of daily wearables. The wearable device is a portable device that is directly worn on a body or integrated into clothes or an accessory of a user. The wearable device is not only a hardware device, but also implements powerful functions through software support, data interaction, and cloud interaction. In a broad sense, the wearable smart device may be a full-featured and large-size device that can implement some or all of functions without relying on a smart phone, for example a smart watch or smart glasses, or a device that focuses only on a specific type of application function and is required to be used together with another device such as a smart phones, for example, various types of smart bands and smart jewelry that monitor physical signs.

The network device in embodiments of this application may be a device for communicating with the terminal device. The network device may also be referred to as an access network device or a wireless access network device. For example, the network device may be a base station. The network device in embodiments of this application may be a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a wireless node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks with a same access technology or different access technologies. A specific technology and specific device form used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, and may be handheld, wearable, or vehicle-mounted; may be deployed on water (for example, on a ship); or may be deployed in the air (for example, on an airplane, an air balloon, or a satellite). In embodiments of this application, a scenario of the network device and the terminal device is not limited.

By way of example rather than limitation, in embodiments of this application, the network device may have a mobility characteristic. For example, the network device may be a mobile device. In some embodiments of this application, the network device may be a satellite, or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments of this application, the network device may alternatively be a base station located on land, water, or the like.

In embodiments of this application, the network device may provide a service for a cell, and the terminal device communicates with the network device by using a transmission resource (for example, a frequency domain resource or a spectrum resource) used by the cell. The cell may be a cell corresponding to the network device (for example, a base station). The cell may belong to a macro base station or belong to a base station corresponding to a small cell. The small cell herein may include: a metro cell (metro cell), a micro cell (micro cell), a pico cell (pico cell), a femto cell (femto cell), or the like. These small cells feature small coverage and low transmit power, and are suitable for providing a high-speed data transmission service.

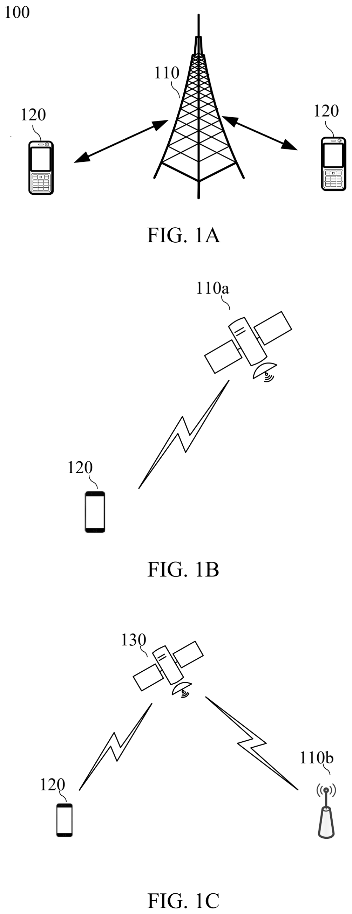

Exemplarily, FIG. 1A is a schematic diagram of an architecture of a communications system according to an embodiment of this application. As shown in FIG. 1A, a communications system 100 may include a network device 110, and the network device 110 may be a device that communicates with a terminal device 120 (or referred to as a communications terminal or a terminal). The network device 110 may provide communication coverage for a specific geographic area, and may communicate with a terminal device located within the coverage.

FIG. 1A shows an example in which there are one network device and two terminal devices. In some embodiments of this application, the communications system 100 may include a plurality of network devices and another number of terminal devices may be included within coverage of each network device, which is not limited in embodiments of this application.

Exemplarily, FIG. 1B is a schematic diagram of an architecture of another communications system according to an embodiment of this application. Referring to FIG. 1B, the communications system includes a terminal device 120 and a satellite 110a, and wireless communication may be performed between the terminal device 120 and the satellite 110a. A network formed between the terminal device 120 and the satellite 110a may also be referred to as an NTN. In the architecture of the communications system shown in FIG. 1B, the satellite 110a may have a function of a base station, and direct communication may be performed between the terminal device 120 and the satellite 110a. In the communications system architecture, the satellite 110a may be referred to as a network device. In some embodiments, the communications system may include a plurality of network devices 110a, and another quantity of terminal devices may be included within coverage of each network device 110a, which is not limited in embodiments of this application.

Exemplarily, FIG. 1C is a schematic diagram of an architecture of still another communications system according to an embodiment of this application. Referring to FIG. 1C, the communications system includes a terminal device 120, a satellite 130, and a base station 110b. Wireless communication may be performed between the terminal device 120 and the satellite 130, and communication may be performed between the satellite 130 and the base station 110b. A network formed between the terminal device 120, the satellite 130, and the base station 110b may also be referred to as an NTN. In the architecture of the communications system shown in FIG. 1C, the satellite 130 may not have a function of a base station, and communication between the terminal device 120 and the base station 110b is required to be relayed by using the satellite 130. Under this system architecture, the base station 110b may be referred to as a network device. In some embodiments of this application, the communications system may include a plurality of network devices 110b, and another quantity of terminal devices may be included within coverage of each network device 110b, which is not limited in embodiments of this application.

It should be noted that FIG. 1A to FIG. 1C are merely examples of systems to which this application is applicable. Certainly, the methods shown in embodiments of this application may also be applied to another system, such as a 5G communications system or an LTE communications system. This is not specifically limited in embodiments of this application.

In some embodiments of this application, the wireless communications systems shown in FIG. 1A to FIG. 1C may further include another network entity such as a mobility management entity (mobility management entity, MME) or an access and mobility management function (access and mobility management function, AMF), which is not limited in embodiments of this application.

It should be understood that a device with a communication function in a network/system in embodiments of this application may be referred to as a communication device. The communications system 100 shown in FIG. 1A is used as an example. The communications device may include the network device 110 and the terminal device 120 that have a communication function. The network device 110 and the terminal device 120 may be specific devices described above, and details are not described herein again. The communications device may further include another device in the communications system 100, for example, another network entity such as a network controller or a mobility management entity, which is not limited in embodiments of this application.

It should be understood that, in embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In descriptions of embodiments of this application, the term "correspond" may mean that there is a direct or indirect correspondence between the two, or may mean that there is an association relationship between the two, or may mean that there is a relationship such as indicating and being indicated, or configuring and being configured.

The term "configuration" in embodiments of this application may include configuration performed by using at least one of system information, radio resource control (radio resource control, RRC) signalling, or a medium access control control element (media access control control element, MAC CE).

In some embodiments of this application, "predefined" or "preset" may be implemented in a manner in which corresponding code, a table, or other related information used for indication is pre-stored in a device (for example, including a terminal device and a network device). A specific implementation is not limited in this application. For example, being predefined may refer to being defined in a protocol.

In some embodiments of this application, the "protocol or standard" may refer to a standard protocol in the communications field, and may include, for example, an LTE protocol, an NR protocol, and a related protocol applied to a future communications system, which is not limited in this application.

For ease of understanding, some related technical knowledge related to embodiments of this application is first introduced. The following related technologies, as optional solutions, may be randomly combined with the technical solutions of embodiments of this application, all of which fall within the protection scope of embodiments of this application. Embodiments of this application include at least part of the following content.

### Random access procedure

A terminal device may establish a connection to a cell by initiating a random access procedure, and obtain uplink synchronization information. The random access procedure may be triggered in a plurality of manners. For example, the random access procedure may be triggered by a physical downlink control channel (physical downlink control channel, PDCCH) order (order), and a network device may instruct, by using the order, the terminal device to re-initiate random access. For another example, the random access procedure may be triggered by a medium access control (media access control, MAC) sublayer. In this case, the terminal device may select a preamble by itself to initiate random access. For another example, the random access procedure may be triggered by an upper layer, for example, initial access, RRC connection reestablishment, and handover (handover).

The random access may include contention random access and contention-free random access (contention free random access channel, CFRA).

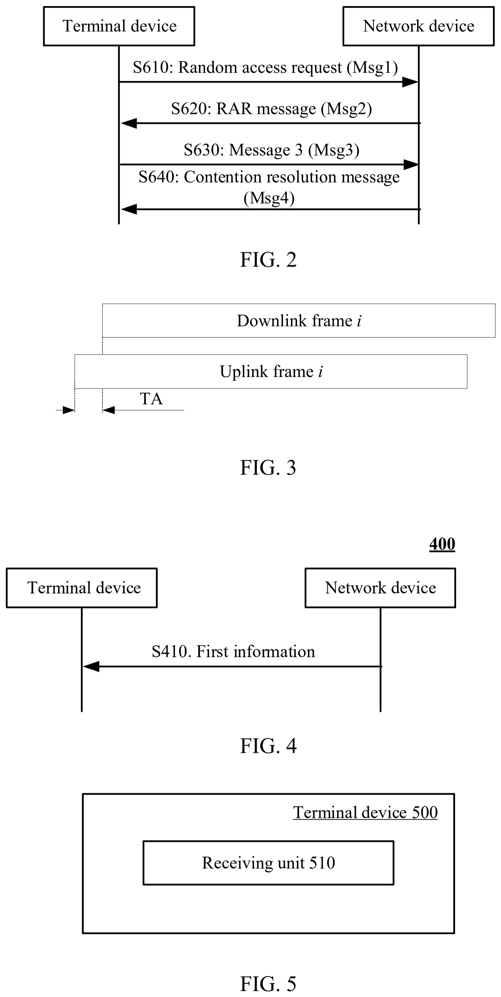

The contention random access may include a four-step random access procedure and a two-step random access procedure. As shown in FIG. 2, the four-step random access procedure may include step S210 to step S240.

In step S210, a terminal device transmits a random access request to a network device, and the random access request may include a random access preamble (preamble). The random access request may also be referred to as a first message or a message 1 (Msg1) in the random access procedure.

In step S220, after detecting the random access preamble transmitted by the terminal device, the network device transmits a random access response (random access response, RAR) to the terminal device. An RAR message may also be referred to as a second message or a message 2 (Msg2) in the random access procedure.

In some embodiments, the RAR may include a TAC field for indicating uplink synchronization information used between the terminal device and the network device. In this way, in an initial access procedure, the terminal device may obtain an initial TA value from the RAR message.

In step S230, the terminal device transmits a message 3 (Msg3) to the network device, where the message 3 may be used for notifying the network device of an event that triggers the random access procedure. For example, if the event is an initial access random procedure, an identity of the terminal device and an establishment cause (establishment cause) are carried in the message 3; if the event is RRC reestablishment, an identity of the terminal device in a connected state and an establishment cause are carried in the message 3.

In step S240, the network device transmits a message 4 (Msg4) to the terminal device, where the message 4 may be used for conflict resolution. Therefore, the message 4 may also be referred to as a contention resolution message.

For contention-free random access, the random access procedure may include the foregoing step S210 and step S220. In addition, for contention-free random access, a message 0, such as a PDCCH order, is required to be sent before the message 1.

### Uplink synchronization

Uplink synchronization refers to a process in which uplink signals from terminal devices that are in different locations of a serving cell and that use a same slot simultaneously arrive at a receiving antenna of a network device, that is, signals from different terminal devices arrive at the receiving antenna of the network device synchronously at a same slot. The purpose of uplink synchronization is to reduce uplink multiple-access interference and multi-path interference between terminal devices in a serving cell.

In an uplink synchronization process, a terminal device may perform uplink synchronization with a network device based on uplink synchronization information corresponding to the network device. The uplink synchronization information may include, for example, timing advance (timing advance, TA).

### Timing advance (TA)

The TA is generally used for uplink transmission, and may mean that a system frame in which a terminal device transmits uplink data should be a specific time ahead of a corresponding downlink frame. For example, timing advance refers to a time by which a terminal device performs transmission in advance of a downlink reference that is the first path (that is, the first symbol of a slot in which a channel is located) of a downlink channel received by the terminal device. FIG. 3 shows a relationship between an uplink frame and a downlink frame. Referring to FIG. 3, a terminal device operating in a single TRP (single-TRP, sTRP) mode is used as an example. The terminal device transmits an uplink channel or a signal at a time earlier, by a specific timing advance (TA), than a reference point which is a downlink receive time point of the terminal device.

A carrier aggregation scenario is used as an example. The terminal device may support different carriers (also referred to as "serving cells"). Different carriers may have different TA. Therefore, a concept of a timing advance group (TA group, TAG) is introduced. Generally, one TAG may include TA of one or more serving cells.

In some implementations, TA may be adjusted based on an absolute value of the TA (also referred to as "absolute TA"). The network device may directly provide an absolute TA by using an absolute MAC CE (Absolute MAC CE) or a payload (payload) of a MAC random access response (random access response, MAC RAR).

In some scenarios, the absolute TA and the acquiring manner of the TA described above occur in a random access procedure.

### Uplink synchronization in multi-TRP (Multi-TRP) scenario

A multi-TRP scenario may be a scenario in which a serving cell configures a plurality of TRPs for a terminal device.

Till R17, for a serving cell configured with a plurality of TRPs, a time difference between transmissions of uplink signals from a terminal device to the TRPs cannot be greater than a length of one CP (cyclic prefix), that is, the same TA is applied for transmissions from the terminal device to the TRPs.

In discussion of MIMO in R18, to enable relatively flexible distances between a terminal device and TRPs, a difference between uplink TAs for transmissions between the terminal device and the TRPs may exceed one CP, that is, different TAs may be applied for transmissions from the terminal device to different TRPs, and may belong to different TAGs.

As mentioned above, in a random access procedure, the TA may be obtained from an RAR message. In a case in which different TAs are applied for transmissions from the terminal device to different TRPs, absolute TAs for transmissions between the terminal device and the TRPs may be obtained by using a CFRA procedure triggered by using a PDCCH order.

For example, after receiving the PDCCH order, the terminal device may transmit a preamble on an indicated physical random access channel (physical random access channel, PRACH) resource (resource) based on the PRACH resource and a dedicated random access resource, such as a dedicated preamble or a related SSB (or may be referred to as a synchronization signal block), that are indicated in the PDCCH order. After receiving the preamble, a base station will return a message, which may include an RAR unit. The RAR unit may include an absolute TA that is for transmission from the terminal device to the base station and estimated based on the received preamble.

In a multi-TRP scenario, how to determine resources corresponding to different TRPs is an urgent problem to be resolved.

In some cases, a TRP may be associated with an SSB, for example, a terminal device may determine a corresponding TRP based on a received SSB.

Therefore, to solve the foregoing problem, in embodiments of this application, first information may be used to indicate a resource (i.e., a first resource) associated with an SSB (i.e., a first SSB), so that a resource corresponding to a TRP associated with the first SSB can be determined, which helps the terminal device determine resources corresponding to different TRPs.

FIG. 4 is a schematic flowchart of a wireless communication method according to an embodiment of this application.

Referring to FIG. 4, the method 400 may include step S410.

In step S410, a terminal device receives first information transmitted by a network device.

The terminal device and the network device may be, for example, a terminal device 120 and a network device 110 (for example, a network device 110 in FIG. 1A, a satellite 110a in FIG. 1B, and a base station 110b in FIG. 1C) shown in FIG. 1.

The first information may be used for indicating a first resource, and the first resource may be associated with a first SSB. As described above, if the first resource associated with the first SSB is determined, the first resource is determined as a resource corresponding to a TRP associated with the first SSB.

In a current serving cell of a terminal device, a plurality of SSBs may be associated with the terminal device.

For example, the SSBs associated with the terminal device may include an SSB broadcast by an initial (initial) carrier bandwidth part (bandwidth part, BWP) in the serving cell, that is, a cell defining synchronization signal block (cell defining SSB, CD-SSB for short). In NR, a serving cell may include a plurality of BWPs. The initial BWP may be a BWP used for initial access by the terminal device.

For another example, the SSB associated with the terminal device may include other SSBs configured for the terminal device in the serving cell. The other SSBs mentioned herein may be SSBs associated with an additional (additional) (or referred to as incremental) physical cell identifier (physical cell ID, PCI).

Correspondingly, in a current serving cell of the terminal device, there may be a plurality of TRPs associated with the terminal device, that is, a multi-TRP scenario. The TRPs associated with the terminal device may include a serving TRP, and may further include an additional (additional) TRP. The serving TRP may be associated with the CD-SSB mentioned above (namely, a second SSB), and the additional TRP may be associated with the first SSB. In other words, the first SSB may be SSBs in the serving cell except the second SSB, namely, the other SSBs described above.

In an implementation, the first SSB may be one of the other SSBs described above, that is, each of the other SSBs described above may be configured with a respective resource. If there are N other SSBs in total, resources are respectively configured for the N SSBs, and thus N resources are required to be reserved. In addition, when a resource associated with the first SSB is indicated by using the first information, at least log₂N bits (bit) are required to be reserved for the first information.

If N is relatively large, according to the foregoing method, relatively high resource overheads and overheads of signaling carrying the first information may be caused. In another implementation, the first SSB may include a plurality of SSBs in the other SSBs described above, that is, a same resource may be configured for the plurality of SSBs, thereby facilitating reduction of resource overheads and overheads of signaling carrying the first information.

In practice, a beam may be activated by activating a terminal control interface (terminal control interface, TCI) state (state), so that an SSB referenced by the beam may be implicitly activated, for example, the SSB may be the other SSBs described above. However, only one SSB can be activated by activating the TCI state at a same instant, that is, at a same instant, only one of the plurality of SSBs except the second SSB in a current serving cell of the terminal device is generally in an active state. The plurality of SSBs in the current serving cell except the second SSB are associated with an additional TRP. Similarly, at a same instant, only one additional TRP in a plurality of additional TRPs configured for the terminal device in the current serving cell is in an active state (the TRP may also be referred to as an active TRP).

For the foregoing reasons, the first SSB may include all SSBs except the second SSB in the current serving cell, that is, a same resource may be configured for all SSBs configured for the terminal device in the current serving cell except the second SSB, thereby further facilitating reduction of resource overheads and overheads of signaling carrying the first information. For example, a quantity of reserved resources may be reduced to one, and a quantity of reserved bits of signaling carrying the first message may be reduced to 1 bit, thereby greatly reducing signaling overheads.

In addition to the first SSB, the terminal device is generally required to configure a resource associated with the second SSB. In an implementation, a second resource may be indicated by using the first information, and the second resource may be associated with the second SSB. Indicating the first resource and the second resource by using same information is beneficial to reducing signaling and is easy to implement.

The first information may be used for indicating the first resource or the second resource by using a generic identifier or a flag bit. For example, the first information may be used for indicating the first resource and the second resource by using one bit. In an example, when the first information is 0, it indicates the first resource; when the first information is 1, it indicates the second resource. In another example, when the first information is 1, it indicates the first resource; when the first information is 0, it indicates the second resource. It should be noted that the foregoing examples are merely provided by way of example, which are not limited in this application.

In an implementation, a mapping relationship between the first information and the first resource and the second resource may be configured by using RRC signaling.

In an implementation, the first resource and the second resource mentioned above may be random access radio resources (PRACH resource). In other words, the first resource may be a random access radio resource associated with an additional TRP, and the second resource may be a random access radio resource associated with a serving TRP.

In an implementation, the first resource and the second resource may be used for uplink synchronization of the terminal device in a serving cell. For example, the first resource may be used for uplink synchronization between the terminal device and a TRP that transmits the first SSB in the serving cell. For another example, the second resource may be used for uplink synchronization between the terminal device and a TRP that transmits the second SSB in the serving cell. The serving cell mentioned herein may be a current serving cell of the terminal device.

The first SSB may be associated with the additional TRP, and the second SSB may be associated with the serving TRP. To be specific, the first resource may be used for uplink synchronization between the terminal device and an additional TRP configured in a current serving cell, and the second resource may be used for uplink synchronization between the terminal device and a serving TRP in the current serving cell.

The first information may be carried in a plurality of types of signaling. In an implementation, the first information may be carried in a physical downlink control channel order.

The following introduces the wireless communications method provided in embodiments of this application by using an example in which the first resource and the second resource are used for uplink synchronization of the terminal device.

At the RAN1#112 meeting, RANI drew the following conclusion.

The following working assumption is confirmed.

For multi-DCI based inter-cell multi-TRP operation with two TA enhancement, one PRACH configuration is supported for each configured additional PCI; and
the additional PRACH configuration may be used in a random access channel (random access channel, RACH) procedure triggered by a PDCCH order for the corresponding configured additional PCI.

At RAN1#112bis, RANI draws the following conclusion.

For inter-cell multi-DCI based multi-TRP operation with two TA enhancement, indication of which PRACH configuration to be used in the RACH procedure in the PDCCH order is supported.

It was also suggested in the meeting that further discussions would be held about:
whether additional PCI or a generic identifier is indicated in PDCCH order; and
the detail of the indication in PDCCH order in terms of whether to support PRACH triggered for inactive additional PCI.

Based on this, each of the TRPs associated with different additional PCIs may be configured with a respective PRACH resource, for example, the configuration may be carried in RRC signaling.

A TRP associated with an additional PCI may also be referred to as an additional TRP. In an implementation, each additional TRP may be indicated by using an additional PCI associated with the additional TRP, for example, may be indicated by using an additional PCI index (additionalPCIIndex) associated with the additional TRP. According to a protocol, the additional PCI index may be greater than or equal to 1 and less than or equal to 7 (that is, 7 => additionalPCIIndex >= 1). In other words, a quantity of additional TRPs may range from 1 to 7.

In addition, according to the protocol, a PRACH resource is also configured for the serving TRP (namely, a TRP not associated with additionalPCIIndex).

In an implementation, additionalPCIIndex may be used for indicating the foregoing two types of PRACH resources (a resource associated with the serving TRP and resources associated with the additional TRPs), where the parameter corresponding to the serving TRP may be set to 0. In this way, after receiving a resource indication, the terminal device may learn which PRACH resource is used for performing a random access procedure, so as to obtain uplink synchronization for the corresponding TRP.

In an implementation, resources used for the additional TRP and the serving TRP may be indicated in the PDCCH order.

As described above, the quantity of additional TRPs may range from 1 to 7, that is, a maximum of seven PRACH resources are required to be configured. If PRACH resources corresponding to the serving TRP and the additional TRP are indicated in the PDCCH order, at least 3 bits are required to be reserved in the PDCCH order to identify the PRACH resources.

In some cases, different TRPs may be associated with different SSBs. Therefore, the terminal device may determine a TRP based on a received SSB.

A TRP associated with an SSB (which may be referred to as the second SSB) broadcast on an initial BWP may be the serving TRP mentioned above. The SSB broadcast on the initial BWP mentioned herein may be a CD-SSB.

In addition, the terminal device is generally configured with other SSBs for broadcasting different additional PCIs. The other SSBs described above are associated with different additional PCIs, and different additional PCIs may be associated with the plurality of additional TRPs mentioned above. Therefore, the other SSBs may be associated with the plurality of additional TRPs.

Based on the mapping relationship between an SSB and a TRP, in an implementation, a resource associated with a TRP corresponding to an SSB may be determined based on indication of a resource associated with the SSB. If each TRP is configured with a respective PRACH resource according to the foregoing method, that is, each SSB configured for a terminal device in a current serving cell is configured with a respective PRACH resource, at least 3-bit signaling is required to indicate respective resources corresponding to the SSBs. In the foregoing manner, there are relatively high PRACH resource overheads and signaling overheads.

In embodiments of this application, in SSBs configured for a terminal device in a serving cell, one PRACH resource is configured for all SSBs except the second SSB, so that in signaling carrying a first message, one bit may be used to distinguish between a second resource associated with the second SSB and a first resource associated with a first SSB.

In other words, one PRACH resource is configured for all additional TRPs of a serving cell, and this PRACH resource is used for only an active additional TRP. In this way, in the signaling carrying the first message, for example, in a PDCCH order, one bit may be used to indicate whether a PRACH resource corresponding to a serving TRP or a PRACH resource corresponding to an active additional TRP is specified in the PDCCH order.

According to this method, a quantity of PRACH resources configured for the additional TRPs may be reduced from the most seven to one, and signaling in the PDCCH order is also reduced from three bits to one bit, which reduces a quantity of resources and overheads of signaling indicating the resources.

The method embodiments of this application are described above in detail with reference to FIG. 1 to FIG. 4. Apparatus embodiments of this application are described below in detail with reference to FIG. 5 to FIG. 7. It should be understood that the descriptions of the method embodiments correspond to descriptions of the apparatus embodiments, and therefore, for parts that are not described in detail, reference may be made to the foregoing method embodiments.

FIG. 5 is a schematic diagram of a structure of a terminal device according to an embodiment of this application. The terminal device 500 shown in FIG. 5 may include a receiving unit 510.

The receiving unit 510 is configured to receive first information transmitted by a network device, where the first information is used for indicating a first resource, and the first resource is associated with a first synchronization signal block SSB.

Optionally, the first SSB is configured in a current serving cell of the terminal device, and the first SSB includes all SSBs in the serving cell except a second SSB.

Optionally, the second SSB is a cell defining synchronization signal block CD-SSB broadcast on an initial carrier bandwidth part BWP of the serving cell.

Optionally, the first information is further used for indicating a second resource, and the second resource is associated with the second SSB.

Optionally, the first resource and the second resource are random access radio resources.

Optionally, the first resource and the second resource are used for uplink synchronization of the terminal device in the serving cell.

Optionally, the first resource is used for uplink synchronization between the terminal device and a TRP that transmits the first SSB in the serving cell.

Optionally, the second resource is used for uplink synchronization between the terminal device and a TRP that transmits the second SSB in the serving cell.

Optionally, the first information is of one bit.

Optionally, the first information is carried in a physical downlink control channel PDCCH order.

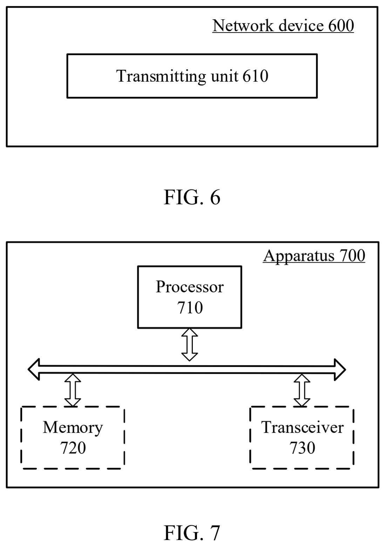

FIG. 6 is a schematic structural diagram of a network device according to an embodiment of this application. A network device 600 shown in FIG. 6 includes a transmitting unit 610.

The transmitting unit 610 is configured to transmit first information to a terminal device, where the first information is used for indicating a first resource, and the first resource is associated with a first synchronization signal block SSB.

Optionally, the first SSB is configured in a current serving cell for the terminal device, and the first SSB includes all SSBs in the serving cell except a second SSB.

Optionally, the second SSB is a cell defining synchronization signal block CD-SSB broadcast on an initial carrier bandwidth part BWP of the serving cell.

Optionally, the first information is further used for indicating a second resource, and the second resource is associated with the second SSB.

Optionally, the first resource and the second resource are random access radio resources.

Optionally, the first resource and the second resource are used for uplink synchronization of the terminal device in the serving cell.

Optionally, the first resource is used for uplink synchronization between the terminal device and a TRP that transmits the first SSB in the serving cell.

Optionally, the second resource is used for uplink synchronization between the terminal device and a TRP that transmits the second SSB in the serving cell.

Optionally, the first information is of one bit.

Optionally, the first information is carried in a physical downlink control channel PDCCH order.

FIG. 7 is a schematic diagram of a structure of a communications apparatus according to an embodiment of the application. Dashed lines in FIG. 7 indicate that a unit or module is optional. The apparatus 700 may be configured to implement the methods described in the foregoing method embodiments. The apparatus 700 may be a chip, a terminal device, or a network device.

The apparatus 700 may include one or more processors 710. The processor 710 may support the apparatus 700 in implementing the methods described in the foregoing method embodiments. The processor 710 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 700 may further include one or more memories 720. The memory 1820 stores a program that may be executed by the processor 710 to cause the processor 710 to perform the methods described in the foregoing method embodiments. The memory 720 may be independent of the processor 710 or may be integrated into the processor 710.

The apparatus 700 may further include a transceiver 730. The processor 710 may communicate with another device or chip through the transceiver 730. For example, the processor 710 may transmit data to and receive data from another device or chip through the transceiver 730.

An embodiment of this application further provides a computer-readable storage medium for storing a program. The computer-readable storage medium may be applied to a terminal or a network device provided in embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes the computer to execute the methods performed by the terminal or the network device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, the "predefining" and "pre-configuration" may be implemented by pre-storing a corresponding code or table in a device (for example, including the terminal device and the access network device) or in other manners that may be used for indicating related information, and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device, first information transmitted by a network device, wherein the first information is used for indicating a first resource, and the first resource is associated with a first synchronization signal block SSB.

2. The method according to claim 1, wherein the first SSB is configured in a current serving cell of the terminal device, and the first SSB comprises all SSBs in the serving cell except a second SSB.

3. The method according to claim 2, wherein the second SSB is a cell defining synchronization signal block CD-SSB broadcast on an initial carrier bandwidth part BWP of the serving cell.

4. The method according to claim 2 or 3, wherein the first information is further used for indicating a second resource, and the second resource is associated with the second SSB.

5. The method according to claim 4, wherein the first resource and the second resource are random access radio resources.

6. The method according to claim 4 or 5, wherein the first resource and the second resource are used for uplink synchronization of the terminal device in the serving cell.

7. The method according to claim 6, wherein the first resource is used for uplink synchronization between the terminal device and a TRP that is in the serving cell and that transmits the first SSB.

8. The method according to claim 6, wherein the second resource is used for uplink synchronization between the terminal device and a TRP that is in the serving cell and that transmits the second SSB.

9. The method according to any one of claims 1 to 8, wherein the first information is of one bit.

10. The method according to any one of claims 1 to 9, wherein the first information is carried in a physical downlink control channel PDCCH order.

11. A wireless communication method, comprising:
transmitting, by a network device, first information to a terminal device, wherein the first information is used for indicating a first resource, and the first resource is associated with a first synchronization signal block SSB.

12. The method according to claim 11, wherein the first SSB is configured in a current serving cell of the terminal device, and the first SSB comprises all SSBs in the serving cell except a second SSB.

13. The method according to claim 12, wherein the second SSB is a cell defining synchronization signal block CD-SSB broadcast on an initial carrier bandwidth part BWP of the serving cell.

14. The method according to claim 12 or 13, wherein the first information is further used for indicating a second resource, and the second resource is associated with the second SSB.

15. The method according to claim 14, wherein the first resource and the second resource are random access radio resources.

16. The method according to claim 14 or 15, wherein the first resource and the second resource are used for uplink synchronization of the terminal device in the serving cell.

17. The method according to claim 16, wherein the first resource is used for uplink synchronization between the terminal device and a TRP that is in the serving cell and that transmits the first SSB.

18. The method according to claim 16, wherein the second resource is used for uplink synchronization between the terminal device and a TRP that is in the serving cell and that transmits the second SSB.

19. The method according to any one of claims 11 to 18, wherein the first information is of one bit.

20. The method according to any one of claims 11 to 19, wherein the first information is carried in a physical downlink control channel PDCCH order.

21. A terminal device, comprising:
a receiving unit, configured to receive first information transmitted by a network device, wherein the first information is used for indicating a first resource, and the first resource is associated with a first synchronization signal block SSB.

22. The terminal device according to claim 21, wherein the first SSB is configured in a current serving cell of the terminal device, and the first SSB comprises all SSBs in the serving cell except a second SSB.

23. The terminal device according to claim 22, wherein the second SSB is a cell defining synchronization signal block CD-SSB broadcast on an initial carrier bandwidth part BWP of the serving cell.

24. The terminal device according to claim 22 or 23, wherein the first information is further used for indicating a second resource, and the second resource is associated with the second SSB.

25. The terminal device according to claim 24, wherein the first resource and the second resource are random access radio resources.

26. The terminal device according to claim 24 or 25, wherein the first resource and the second resource are used for uplink synchronization of the terminal device in the serving cell.

27. The method according to claim 26, wherein the first resource is used for uplink synchronization between the terminal device and a TRP that is in the serving cell and that transmits the first SSB.

28. The method according to claim 26, wherein the second resource is used for uplink synchronization between the terminal device and a TRP that is in the serving cell and that transmits the second SSB.

29. The terminal device according to any one of claims 21 to 28, wherein the first information is of one bit.

30. The terminal device according to any one of claims 21 to 29, wherein the first information is carried in a physical downlink control channel PDCCH order.

31. A network device, comprising:
a transmitting unit, configured to transmit first information to a terminal device, wherein the first information is used for indicating a first resource, and the first resource is associated with a first synchronization signal block SSB.

32. The network device according to claim 31, wherein the first SSB is configured in a current serving cell of the terminal device, and the first SSB comprises all SSBs in the serving cell except a second SSB.

33. The network device according to claim 32, wherein the second SSB is a cell defining synchronization signal block CD-SSB broadcast on an initial carrier bandwidth part BWP of the serving cell.

34. The network device according to claim 32 or 33, wherein the first information is further used for indicating a second resource, and the second resource is associated with the second SSB.

35. The network device according to claim 34, wherein the first resource and the second resource are random access radio resources.

36. The network device according to claim 34 or 35, wherein the first resource and the second resource are used for uplink synchronization of the terminal device in the serving cell.

37. The method according to claim 36, wherein the first resource is used for uplink synchronization between the terminal device and a TRP that is in the serving cell and that transmits the first SSB.

38. The method according to claim 36, wherein the second resource is used for uplink synchronization between the terminal device and a TRP that is in the serving cell and that transmits the second SSB.

39. The network device according to any one of claims 31 to 38, wherein the first information is of one bit.

40. The network device according to any one of claims 31 to 39, wherein the first information is carried in a physical downlink control channel PDCCH order.

41. A terminal device, comprising a memory and a processor, wherein the memory is configured to store a program, and the processor is configured to invoke the program in the memory to execute the method according to any one of claims 1 to 10.

42. A network device, comprising a memory and a processor, wherein the memory is configured to store a program, and the processor is configured to invoke the program in the memory to execute the method according to any one of claims 11 to 20.

43. An apparatus, comprising a processor configured to invoke a program from a memory, to cause the apparatus to execute the method according to any one of claims 1 to 20.

44. A chip, comprising a processor, configured to invoke a program from a memory to cause a device on which the chip is installed to execute the method according to any one of claims 1 to 20.

45. A computer-readable storage medium, wherein the computer-readable storage medium stores a program, and the program causes a computer to execute the method according to any one of claims 1 to 20.

46. A computer program product, comprising a program that causes a computer to execute the method according to any one of claims 1 to 20.

47. A computer program, wherein the computer program causes a computer to execute the method according to any one of claims 1 to 20.
